(19) **Europäisches Patentamt / European Patent Office / Office européen des brevets**

(11) **EP 3 521 263 B1**

(12) # EUROPEAN PATENT SPECIFICATION

(45) Date of publication and mention of the grant of the patent:
**11.01.2023 Bulletin 2023/02**

(21) Application number: **17856401.9**

(22) Date of filing: **29.09.2017**

(51) International Patent Classification (IPC):
**C04B 35/486** (2006.01)   **C04B 35/626** (2006.01)
**C01G 25/00** (2006.01)   **H01M 8/126** (2016.01)

(52) Cooperative Patent Classification (CPC):
**C04B 35/486; C01G 25/00; C04B 35/6262; H01M 8/126;** C04B 2235/3217; C04B 2235/3224; C04B 2235/3225; C04B 2235/3229; C04B 2235/5445; C04B 2235/6567; C04B 2235/96; Y02E 60/50; Y02P 70/50

(86) International application number:
**PCT/JP2017/035374**

(87) International publication number:
**WO 2018/062452 (05.04.2018 Gazette 2018/14)**

(54) **CERIUM-OXIDE-STABILIZED ZIRCONIUM-OXIDE-BASED COMPOSITION, AND METHOD FOR PRODUCING SAME**

AUF ZEROXIDSTABILISIERTEM ZIRKONIUMOXID BASIERENDE ZUSAMMENSETZUNG UND VERFAHREN ZUR HERSTELLUNG DAVON

COMPOSITION À BASE D'OXYDE DE ZIRCONIUM STABILISÉE À L'OXYDE DE CÉRIUM ET PROCÉDÉ POUR SA PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2016 JP 2016193162**

(43) Date of publication of application:
**07.08.2019 Bulletin 2019/32**

(73) Proprietors:
• **Kyushu University, National University Corporation**
  **Nishi-ku**
  **Fukuoka-shi**
  **Fukuoka 8190395 (JP)**
• **Daiichi Kigenso Kagaku Kogyo Co., Ltd.**
  **Osaka-shi, Osaka 541-0041 (JP)**

(72) Inventors:
• **SHIRATORI, Yusuke**
  **Fukuoka-shi, Fukuoka 8190395 (JP)**
• **TAMAZAKI, Fuminori**
  **Osaka-shi**
  **Osaka 5410041 (JP)**

• **YAMAMOTO, Takuya**
  **Osaka-shi**
  **Osaka 5410041 (JP)**

(74) Representative: **Lederer & Keller Patentanwälte Partnerschaft mbB**
**Unsöldstraße 2**
**80538 München (DE)**

(56) References cited:
**EP-A1- 0 214 291**   **EP-A1- 2 672 554**
**WO-A1-2006/024098**   **JP-A- S6 177 665**
**JP-A- S63 139 049**   **JP-A- 2000 340 240**
**JP-A- 2004 087 490**   **JP-A- 2006 104 023**
**JP-A- 2009 104 990**   **JP-A- 2011 079 723**
**JP-A- 2013 008 684**

- HERNANDEZ M T ET AL: "EFFECT OF AL2O3 ADDITIONS ON THE ELECTRICAL PROPERTIES OF ZRO2-Y2O3AND ZRO2-Y2O3-CEO2 ELECTROLYTES", PROCEEDINGS OF THE INTERNATIONAL SYMPOSIUM ON SOLID OXIDE FUEL CELLS. ATHENS, JULY 2 - 5, 1991; [PROCEEDINGS OF THE INTERNATIONAL SYMPOSIUM ON SOLID OXIDE FUEL CELLS], LUXEMBURG, EEC, LU, vol. SYMP. 2, 2 July 1991 (1991-07-02), pages 421-428, XP000546134, ISBN: 978-92-826-2556-9
- LIU, MAN et al.: "Investigation of (Ce02) x (SC203) (0.11-x) (Zr02) 0.89 (x=0. 01-0 .10) electrolyte materials for intermediate-temperature solid oxide fuel cell", Journal of Alloys and Compounds, vol. 502, 28 December 2009 (2009-12-28), pages 319-323, XP027129903,
- JYUNG-DONG LIN et al.: "Mechanical properties and resistance to hydrothermal aging of ceria-and yttria-doped tetragonal zirconia ceramics", Materials Chemistry and Physics, vol. 77, 2002, pages 808-818, XP055595920, ISSN: 0254-0584, DOI: 10.1016/S0254-0584(02)00161-X

**Description**

Technical Field

The present invention relates to a cerium oxide-stabilized zirconium oxide-based composition and to a method for producing the same.

Background Art

Solid oxide fuel cells, called "SOFCs," are known to have higher power generation efficiency than other types of fuel cells. Accordingly, SOFCs have attracted attention because they can construct new power generation systems capable of effectively using energy, and their development has been actively promoted in recent years. SOFCs are configured to comprise a single cell structure having a fuel electrode on one surface of a solid electrolyte, and an air electrode on the opposite surface of the solid electrolyte.

Yttria-stabilized zirconia is well known as an electrolyte material for forming solid electrolytes. Further, scandium oxide-stabilized zirconium oxide-based compositions using scandium oxide, which is a stabilizing agent of zirconium oxide, are also known as electrolyte materials for solid electrolytes.

For example, PTL 1 discloses a zirconia ceramic comprising 7 to 10 mol% of cerium oxide and 0.1 to 0.5 mol% of yttrium oxide. The zirconia ceramic is characterized in that 80 wt.% or more of crystal particles that constitute the zirconia ceramic is a tetragonal crystal at ordinary temperature, and the remainder is a monoclinic crystal; and in that the zirconia ceramic is a material having an average crystal particle of 1 $\mu$m or less, and having high strength.

Further, PTL 2 discloses a tetragonal partially stabilized zirconia sintered body, wherein yttrium oxide or cerium oxide as a second component forms a solid solution with zirconium oxide, and aluminum and sodium are contained as third components.

PTL 3 discloses a zirconia composite sintered body comprising Y-TZP that forms a solid solution of $Y_2O_3$ and comprises a tetragonal crystal (or tetragonal and cubic crystals) sintered at a temperature in a stable range of tetragonal zirconia (t-$ZrO_2$), and a solid solution of $CeO_2$.

PTL 4 discloses a cerium oxide-stabilized zirconium oxide-based composition that contains a small amount of monoclinic crystal phase having low oxygen ion conductivity, and that has a thermal expansion coefficient within a prescribed range and a high thermal shrinkage starting temperature.

WO 2006/024098 A1 discloses a multi-component powder for consolidation to form a green body to be sintered into a zirconia ceramic.

JP S61 77665 A relates to a high toughness zirconia sintered body.

EP 0 214 291 A1 relates to zirconia ceramics including fully stabilized zirconia, partially-stabilized zirconia and partially-stabilized zirconia containing alumina.

The article "Investigation of (CeO2)x(Sc2O3)(0.11-x)(ZrO2)0.89 (x=0.01-0.10) electrolyte materials for intermediate-temperature solid oxide fuel cell"(LIU, MAN et al., Journal of Alloys and Compounds, vol. 502, 2009-12-28, pages 319-323)describes the oxide ionic conductivities of $CeO_2$ and $Sc_2O_3$ co-doped zirconia electrolytes optimized for the application in intermediate-temperature solid oxide fuel cell.

JP 2013 008684 A relates to a method for producing a solid stabilized zirconia electrolyte sheet for a solid oxide fuel cell.

Citation List

Patent Literature

PTL 1: JPS63-139049A
PTL 2: JP2000-327416A
PTL 3: JP2006-104023A
PTL 4: JP2011-79723A

Summary of Invention

Technical Problem

However, no prior art has examined improvement of both physical properties of mechanical characteristics (e.g., strength and toughness) and electrical conduction properties. In the field of solid oxide fuel cells, it is required to further improve both physical properties of mechanical characteristics and electrical conduction properties. Conventionally known materials have room for improvement in this respect.

The present invention was made in consideration of the above circumstances. An object of the present invention is to provide a cerium oxide-stabilized zirconium oxide-based composition that can form a material having both excellent electrical conduction properties and mechanical characteristics, and a method for producing the same.

Solution to Problem

As a result of extensive studies to achieve the above object, the present inventors found that a cerium oxide-stabilized zirconium oxide having both excellent mechanical characteristics and electrical conduction properties can be obtained in such a manner that in a zirconium oxide-based composite oxide, the content ratio of cerium oxide and an oxide of a rare earth element is adjusted, and a specific amount of alumina is contained. Thus, the present invention has been completed.

In particular, the present inventors found, in the completion process of the present invention, that zirconium oxide stabilized only with cerium oxide has high toughness but low electrical conduction properties, and that zirconium oxide stabilized with an oxide of a rare earth element has high electrical conduction properties but low mechanical characteristics, such as toughness. Based on these findings, the present inventors focused on the possibility that a cerium oxide-stabilized zirconium oxide having both mechanical characteristics and electrical conduction properties can be obtained by adjusting the content ratio of cerium oxide and an oxide of a rare earth element, and incorporating a specific amount of alumina. Thus, the present invention has been completed. Furthermore, the present inventors found that the addition of a specific amount of alumina increases sinterability, and that desired materials can be prepared in an inexpensive and simple manner, without requiring special operations, such as a hot isostatic pressure method. Thus, the present invention has been completed.

Advantageous Effects of Invention

A material having both excellent electrical conduction properties and mechanical characteristics (strength, toughness, etc.) can be formed by using the cerium oxide-stabilized zirconium oxide-based composition according to the present invention. Moreover, the cerium oxide-stabilized zirconium oxide-based composition according to the present invention can be produced by a simple method, the production costs can be kept down, and the composition can be applied to various applications.

Description of Embodiments

Embodiments of the present invention are described in detail below. In the present specification, the terms "comprise" and "contain" include the concepts of "comprise," "contain," "essentially consist of," and "consist of."

1. Cerium Oxide-Stabilized Zirconium Oxide-Based Composition

The cerium oxide-stabilized zirconium oxide-based composition of the present invention comprises a compound represented by the following formula (1):

$$(ZrO_2)_{1-x-a}(CeO_2)_x(M_2O_3)_a \qquad (1)$$

and alumina;

wherein in formula (1), the value of x is $0.065 \leq x \leq 0.12$, the value of a is $0.01 \leq a \leq 0.03$, and M is at least one rare earth element other than cerium; and
the alumina is contained in an amount of 1 mol% or less based on the compound.

When the cerium oxide-stabilized zirconium oxide-based composition of the present invention is used, a material having both excellent electrical conduction properties and mechanical characteristics can be formed. For example, a sintered body obtained by sintering the cerium oxide-stabilized zirconium oxide-based composition can have both excellent electrical conduction properties and mechanical characteristics.

In the present specification, the compound represented by formula (1) is abbreviated as "compound A." Moreover, the cerium oxide-stabilized zirconium oxide-based composition of the present invention is also simply referred to as the "composition."

As is clear from formula (1), compound A comprises $ZrO_2$, $CeO_2$, and $M_2O_3$ as structural units, and each oxide can form a solid solution. The composition ratio of $ZrO_2$, $CeO_2$, and $M_2O_3$ per molecule of compound A is 1-x-a:x:a.

Because compound A contains $ZrO_2$ and $CeO_2$ components, for example, it is possible to impart high toughness to the sintered body of the composition. Because compound A contains $M_2O_3$ component, for example, it is possible to impart high strength and electrical conduction properties to the sintered body of the composition.

In formula (1), M is a rare earth element other than cerium. Of these rare earth elements, M is particularly preferably at least one member selected from the group consisting of Sc, Y, and Yb. In this case, the crystal structure of the sintered body of the composition tends to be stable, and the sintered body tends to have more excellent electrical conduction properties. It is preferable that M does not contain Pm because it does not have a stable isotope.

When the value of x in formula (1) is within the range of $0.065 \leq x \leq 0.12$, for example, the crystal structure of the sintered body of the composition tends to be more stable, and the sintered body can have high mechanical characteristics. If the value of x is less than 0.065, a volume change in compound A is likely to occur. The lower limit of x is preferably 0.07. The upper limit of x is preferably 0.115, and more preferably 0.11.

Because the value of a in formula (1) is $0.01 \leq a \leq 0.03$, for example, the crystal structure of the sintered body of the composition tends to be more stable, and the resistance of the sintered body tends to be lower; thus, the sintered body can have high ionic conductivity (i.e., high electrical conductivity). If the value of a is less than 0.01, the sintered body of the composition has high mechanical characteristics, but does not have high electrical conduction properties. If the value of a exceeds 0.03, the mechanical characteristics of the sintered body of the composition are reduced. The value of a is preferably $0.01 \leq a \leq 0.025$, and particularly preferably $0.01 \leq a \leq 0.02$.

The type of alumina ($Al_2O_3$) is not limited. For example, alumina can be in a particle shape, and the average particle diameter thereof can be set to 0.1 to 1 $\mu$m. The average particle diameter of alumina can be measured by SEM. Specifically, the average particle diameter of alumina can be measured in such a manner that 20 alumina particles are selected at random in SEM observation, their equivalent circle diameters are measured, and the arithmetic average is determined. When the average particle diameter of alumina present in the sintered body is measured, for example, the cross-section of the sintered body can be observed by SEM, and the average particle diameter can be measured by the above method.

Alumina may be dispersed in the sintered body of the composition. More specifically, alumina is easily dispersed uniformly in the sintered body; that is, alumina is less likely to be unevenly distributed in the sintered body. The sintered body thereby tends to have a desired stable crystal structure and to have much higher electrical conduction properties. Furthermore, because the composition contains alumina, sintering of the composition tends to be promoted, and a sintered body can be obtained by a simple method.

The content of alumina in the composition is 1 mol% or less based on the total amount (the total number of moles) of compound A. Because the alumina content is within this range, the composition and the crystal structure of the sintered body tend to be stable, and excellent electrical conduction properties can be exhibited. The alumina content is particularly preferably 0.8 mol% or less based on the total amount (the total number of moles) of compound A. Even if the alumina content is 0 mol% (not part of the invention), the composition may have high electrical conduction properties and mechanical characteristics. In terms of the tendency to have high electrical conduction properties and mechanical characteristics, the lower limit of the alumina content is preferably 0.1 mol% based on the total amount (the total number of moles) of compound A.

The composition may contain other additives within the range that does not inhibit the effects of the present invention, as long as it contains compound A and alumina. For example, the composition may contain compounds other than compound A, or may contain a sintering aid etc.

Moreover, the composition may contain two or more different compounds A.

The composition can be formed into a powder shape, for example. When the composition is powder, the average particle diameter of particles constituting the powder can be set to 0.1 to 1 $\mu$m, for example. In terms of particularly excellent sinterability, the average particle diameter is preferably 0.2 to 0.8 $\mu$m. The average particle diameter of the composition as mentioned herein refers to a value measured by a laser diffraction method.

The composition can be formed into a sintered body by sintering. Examples of the method for sintering the composition include, but are not limited to, a cold isostatic pressure (CIP) method, a hot isostatic pressure (HIP) method, and other sintering methods.

For example, in the case of CIP, the pressure can be set to 0.3 to 2.5 t/cm$^2$, and preferably 0.5 to 2 t/cm$^2$. The sintering temperature can be set to 1200 to 1600°C, and preferably 1300 to 1500°C. The sintering time can be set to 1 to 24 hours, and preferably 2 to 20 hours. Sintering can be performed under atmospheric air, for example. The sintering method is preferably CIP because it can produce sintered bodies in an inexpensive and simple manner.

Below, a sintered body obtained by sintering the composition of the present invention is simply referred to as the "sintered body."

The fracture toughness value of the sintered body can be 5.0 MPa·m$^{0.5}$ or more, for example. The fracture toughness value of the sintered body can be measured according to JIS 1607. Specifically, when Vickers hardness measured using a Vickers indenter is regarded as Hv, Young's modulus is regarded as E, pressing load is regarded as P, and half of the average crack length is regarded as c, the fracture toughness value can be calculated using the following formula.

```
K_IC = 0.018 x [E/Hv]^(0.5) x P/[c^(1.5)]
```

wherein $K_{IC}$ represents a fracture toughness value.

The fracture toughness value of the sintered body is preferably 5.2 MPa·m$^{0.5}$ or more, and particularly preferably 5.4 MPa·m$^{0.5}$ or more, in terms of further improving mechanical characteristics. The upper limit of the fracture toughness value of the sintered body is not limited, and can be 30 MPa·m$^{0.5}$, for example.

Moreover, the bending strength of the sintered body can be 700 MPa or more, for example. The bending strength of the sintered body can be evaluated by a three-point bending measurement method according to JIS R1601.

The bending strength of the sintered body is preferably 730 MPa or more, and particularly preferably 750 MPa or more, in terms of further improving mechanical characteristics. The upper limit of the bending strength of the sintered body is not limited, and can be 1500 MPa, for example.

The sintered body may satisfy both a fracture toughness value of 5 MPa·m$^{0.5}$ or more and a bending strength of 700 MPa or more, or may satisfy one of them.

Because the sintered body can have more excellent electrical conduction properties, the electrical conductivity of the sintered body is preferably as follows:

$5.0 \times 10^{-4}$ (S/cm) or more at 600°C,
$1.5 \times 10^{-3}$ (S/cm) or more at 700°C,
$3.5 \times 10^{-3}$ (S/cm) or more at 800°C,
$7.5 \times 10^{-3}$ (S/cm) or more at 900°C, and
$1.5 \times 10^{-2}$ (S/cm) or more at 1000°C.

Moreover, the electrical conductivity of the sintered body is more preferably as follows:

$5.1 \times 10^{-4}$ (S/cm) or more at 600°C,
$1.6 \times 10^{-3}$ (S/cm) or more at 700°C,
$4.0 \times 10^{-3}$ (S/cm) or more at 800°C,
$8.0 \times 10^{-3}$ (S/cm) or more at 900°C, and
$1.5 \times 10^{-2}$ (S/cm) or more at 1000°C.

Furthermore, the electrical conductivity of the sintered body is particularly preferably as follows:

$5.2 \times 10^{-4}$ (S/cm) or more at 600°C,
$1.7 \times 10^{-3}$ (S/cm) or more at 700°C,
$4.3 \times 10^{-3}$ (S/cm) or more at 800°C,
$8.5 \times 10^{-3}$ (S/cm) or more at 900°C, and
$1.5 \times 10^{-2}$ (S/cm) or more at 1000°C.

The electrical conductivity of the sintered body can be measured by using an alternating-current impedance method.

The density of the sintered body is not limited. For example, because the sintered body is likely to have excellent electrical conduction properties and mechanical characteristics, the density of the sintered body can be set to 96% or more, preferably 97% or more, and more preferably 98% or more. The density of the sintered body can be measured by the Archimedes method.

The form of the crystal phase of the sintered body is not limited. The sintered body preferably contains a tetragonal crystal phase because the sintered body is likely to have excellent electrical conduction properties and mechanical characteristics. The crystal phase of the sintered body may contain a cubic crystal phase, in addition to or in place of a tetragonal crystal phase. The form of the composition before sintering may contain a monoclinic crystal phase and/or a tetragonal crystal phase as a crystal phase. The number of crystal phases may be one or two or more.

A sintered body having both excellent electrical conduction properties and mechanical characteristics can be formed by using the composition of the present invention. Accordingly, the sintered body of the composition can be suitably used as a solid electrolyte applicable to SOFCs (solid oxide fuel cells), for example. That is, the composition of the present invention is suitable as an electrolyte material for forming the above solid electrolyte.

Moreover, since the sintered body has not only excellent electrical conduction properties, but also excellent mechanical characteristics, for example, a solid electrolyte for SOFCs having a size and shape that have not existed before can be formed.

The application of the composition of the present invention is not limited to SOFCs; the composition can also be applied for other various electronic material applications.

When the composition of the present invention is used for SOFC applications, a solid electrolyte can be produced specifically by sintering the composition to form a sintered body (a cerium oxide-stabilized zirconium oxide-based sintered body), and molding the sintered body into a predetermined shape. The solid electrolyte is used as a solid electrolyte plate for SOFCs.

Usable examples of the method for molding the solid electrolyte include a pressure forming method using a hydrostatic pressure pressing machine, a doctor blade method, and a calender roll method. The molding conditions etc. are not limited, and the same conditions as conventional conditions can be used.

A fuel electrode is formed on one surface of the above solid electrolyte plate, and an air electrode is formed on the opposite surface, thereby obtaining a solid oxide fuel cell comprising a single cell structure having a fuel electrode on one surface of a solid electrolyte, and an air electrode on the opposite surface.

To form a fuel electrode on one surface of the solid electrolyte plate, a slurry containing ceramic powder for forming the fuel electrode is prepared, and the slurry is applied to one surface of the solid electrolyte plate by the so-called slurry coating method, followed by calcination at a predetermined temperature. A thin-film like fuel electrode is thereby formed on one surface of the solid electrolyte plate. Examples of the ceramic powder for forming the fuel electrode include a Ni-zirconia-cermet material comprising 60 wt.% of nickel and 40 wt.% of zirconia, and the like. In addition, ceramic powder conventionally used as a fuel electrode can also be used. The thickness of the fuel electrode can be set to, but is not limited to, 50 $\mu$m, for example.

In contrast, to form an air electrode on the solid electrolyte plate, a slurry containing ceramic powder for forming the air electrode is applied to one surface of the solid electrolyte plate by a slurry coating method, followed by calcination at a predetermined temperature, as with the formation of the fuel electrode. A film-like air electrode is thereby formed on the surface of the solid electrolyte plate opposite to the surface on which the fuel electrode is formed. Examples of the ceramic powder for forming the air electrode include lanthanum strontium manganate (La(Sr)MnO$_3$) and the like. In addition, ceramic powder conventionally used as an air electrode can also be used. The thickness of the air electrode can be set to, but is not limited to, 50 $\mu$m, for example.

The solid oxide fuel cell configured as described above comprises a solid electrolyte plate formed with the composition of the present invention, and thus has excellent power generation efficiency. Accordingly, it is possible to construct a power generation system with excellent energy efficiency by using such a solid oxide fuel cell.

2. Method for Producing Cerium Oxide-Stabilized Zirconium Oxide-Based Composition

The method for producing a cerium oxide-stabilized zirconium oxide-based composition is not limited. For example, the composition can be produced by a production method comprising the following steps 1 to 4:

step 1: preparing a raw material containing a zirconium salt, a cerium salt, a rare earth salt other than cerium, and a solvent;
step 2: neutralizing the raw material obtained in step 1 to obtain a precipitate;
step 3: calcining the precipitate obtained in step 2 to obtain an oxide; and
step 4: mixing the oxide obtained in step 3 with alumina.

In step 1, a raw material containing a zirconium salt, a raw material containing a cerium salt, and a raw material containing a rare earth salt other than cerium are dissolved or dispersed in a solvent.

The zirconium salt is not limited as long as it can supply zirconium ions. Examples include zirconium inorganic acid salts, such as zirconium oxynitrate and zirconium oxychloride; zirconium organic acid salts, such as zirconium tetrabutoxide; and the like. The zirconium salt-containing raw material can contain one or two or more of the above zirconium salts. The zirconium salt-containing raw material may consist of one or more zirconium salts.

The zirconium salt can be dissolved in a solvent and used as a zirconium salt solution. The solvent is not limited as long as it can dissolve zirconium salts. Examples include aqueous solvents, such as water; organic solvents, such as methanol and ethanol; and the like. These solvents can be used singly or in combination of two or more.

Specific examples of combinations of zirconium salts and solvents are described below. When an aqueous solvent, such as water, is used as the solvent, a zirconium inorganic acid salt, such as zirconium oxynitrate or zirconium oxychloride, can be used as the zirconium salt. Moreover, when an organic solvent, such as methanol or ethanol, is used as the solvent, a zirconium organic acid salt, such as zirconium tetrabutoxide, can be used as the zirconium salt.

In the present embodiment, a combination of an aqueous solvent (particularly water) as the solvent, and zirconium oxychloride as the zirconium salt, is preferable in terms of productivity etc. on an industrial scale.

The cerium salt is not limited as long as it can supply cerium ions. Examples include inorganic acid salts of cerium, such as nitrate, chloride, and oxalate; cerium organic acid salts, such as methoxide, ethoxide, and butoxide; and the like. The cerium salt-containing raw material can contain one or two or more of the above cerium salts. The cerium salt-containing raw material may consist of one or more cerium salts.

The cerium salt can be dissolved in a solvent and used as a cerium salt solution. The solvent is not limited as long as it can dissolve cerium salts. Examples include aqueous solvents, such as water; organic solvents, such as methanol and ethanol; and the like. These solvents can be used singly or in combination of two or more.

Specific examples of combinations of cerium salts and solvents are described below. When an aqueous solvent, such as water, is used as the solvent, an inorganic acid salt of cerium, such as nitrate, chloride, or oxalate, can be used as the cerium salt. Moreover, when an organic solvent, such as methanol or ethanol, is used as the solvent, a cerium organic acid salt, such as methoxide, ethoxide, or butoxide, can be used as the cerium salt. In the present embodiment, a combination of an aqueous solvent (particularly water) as the solvent, and chloride is preferable in terms of productivity etc. on an industrial scale.

The rare earth salt is not limited as long as it can supply rare earth ions. Examples include inorganic acid salts of rare earths, such as nitrate, chloride, and oxalate; organic acid salts of rare earths, such as methoxide, ethoxide, and butoxide; and the like. The rare earth salt-containing raw material can contain one or two or more of the above rare earth salts. The rare earth salt-containing raw material may consist of one or more rare earth salts.

The rare earth salt can be dissolved in a solvent and used as a rare earth salt solution. The solvent is not limited as long as it can dissolve salts of rare earths. Examples include aqueous solvents, such as water; organic solvents, such as methanol and ethanol; and the like. These solvents can be used singly or in combination of two or more.

Specific examples of combinations of rare earth salts and solvents are described below. When an aqueous solvent, such as water, is used as the solvent, an inorganic acid salt of a rare earth, such as nitrate, chloride, or oxalate, can be used as the rare earth salt. Moreover, when an organic solvent, such as methanol or ethanol, is used as the solvent, an organic acid salt of a rare earth, such as methoxide, ethoxide, or butoxide, can be used as the rare earth salt. In the present embodiment, a combination of an aqueous solvent (particularly water) as the solvent, and chloride is preferable in terms of productivity etc. on an industrial scale.

In step 1, a raw material containing a zirconium salt, a cerium salt, a rare earth salt, and a solvent can also be prepared by mixing beforehand the zirconium salt, the cerium salt, and the rare earth salt in a solid state, and then mixing the resulting mixture with the solvent. The solvents usable in this case are the same as described above.

The raw material prepared in step 1 can serve as the raw material for preparing compound A. Below, the raw material prepared in step 1 is also referred to as "the raw material of compound A."

In step 2, the raw material of compound A obtained in step 1 is neutralized, and a precipitate is obtained by this neutralization. The precipitate is composite hydroxide derived from the zirconium salt, ceric salt, and rare earth salt.

For example, an alkali can be used for the neutralization of the raw material of compound A. Usable examples of the alkali include sodium hydroxide, potassium hydroxide, ammonium hydroxide, and the like. These alkalis can be used singly or in combination of two or more. Moreover, the alkali may be added as a solid or an alkali solution to the raw material of compound A.

In step 3, the precipitate (composite hydroxide) obtained in step 2 is calcined to obtain an oxide.

The precipitate obtained in step 2 can be collected beforehand, for example, by solid-liquid separation. The precipitate may be collected in either of steps 2 and 3.

The calcination conditions are not limited. For example, the calcination temperature can be set to 600 to 1200°C, and preferably 700 to 1100°C. The calcination time can be set to 2 to 10 hours, and preferably 3 to 9 hours. Calcination can be performed under atmospheric pressure, for example.

In step 4, the oxide obtained in step 3 is mixed with alumina.

Alumina powder is preferable, from the viewpoint, for example, that alumina is easily dispersed uniformly in the sintered body. In this case, the average particle diameter of alumina is preferably 0.1 to 1 $\mu$m, for example.

Alumina is mixed with the oxide so that the amount of alumina is 1 mol% or less based on the total amount (the total number of moles) of the raw material of compound A (or the total amount of the oxide). The amount of alumina added is particularly preferably 0.8 mol% or less based on the total amount (the total number of moles) of the raw material of compound A. The lower limit of the amount of alumina is preferably 0.1 mol% based on the total amount (the total number of moles) of the raw material of compound A.

When alumina is mixed with the oxide obtained in step 3, the oxide may be subjected to grinding treatment beforehand. Alternatively, grinding treatment may be performed after alumina is mixed with the oxide obtained in step 3.

After the oxide is mixed with alumina, grinding treatment may be performed with a grinder, such as a ball mill, if necessary. When grinding is performed in such a manner, alumina is easily dispersed more uniformly in the sintered body.

After the oxide is mixed with alumina, optionally followed by grinding treatment, the obtained powder can be dried. In the drying treatment, for example, the drying temperature can be set to 100 to 250°C, and preferably 110 to 240°C. The drying time can be set to 12 to 120 hours, and preferably 24 to 96 hours. The drying treatment can be performed under atmospheric pressure, for example.

As a result of passing through steps 1 to 4 described above, a cerium oxide-stabilized zirconium oxide-based composition is obtained in a powder shape. Specifically, compound A is prepared in steps 1 to 3, and compound A is mixed with alumina in step 4, thereby obtaining a cerium oxide-stabilized zirconium oxide-based composition.

The production method comprising steps 1 to 3 is the so-called coprecipitation method, and these steps are for preparing compound A. The preparation method of compound A is not limited to the coprecipitation method comprising steps 1 to 3, and other various methods, such as sol gel method, may be used for preparation. However, it is preferable that compound A is produced by a coprecipitation method (comprising steps 1 to 3), in terms of cost and productivity. In this case, the dispersed state of the alumina component in the sintered body tends to be improved, and sintering of compound A tends to be promoted. As a result, the sintered body tends to have a desired stable crystal structure, and can have excellent electrical conduction properties.

When compound A is produced by a coprecipitation method comprising step 1, step 2 and 3, compound A comprises, as a main component, a cerium oxide-stabilized zirconium oxide-based compound in which a rare earth element other than ceria and cerium is dissolved in zirconia. Alumina may be present in the compound in an excellent dispersed state.

The method for producing a cerium oxide-stabilized zirconium oxide-based composition powder may comprise a step of adding materials, such as additives other than compound A and alumina. This addition may be conducted in steps 1 to 4, or a step of adding additives may be separately provided. Examples of other additives include a sintering aid etc.

The composition obtained by the above production method can be sintered to thereby form a sintered body. The sintering method is not limited, and the sintering methods mentioned above (e.g., cold isostatic pressure (CIP) method and hot isostatic pressure (HIP) method) can be used. The sintering conditions are also as described above. In particular, because the composition contains alumina, sintering is easily promoted. Therefore, a sintered body can be formed in an inexpensive and simple manner, without requiring special operations for hot isostatic pressure (HIP) method.

The sintered body obtained by sintering as described above is formed using the composition of the present invention, and thus has both excellent electrical conduction properties and mechanical characteristics. Accordingly, the sintered body of the composition can be suitably used, for example, as a solid electrolyte applicable to SOFCs (solid oxide fuel cells) etc.

Examples

The present invention is described in more detail below with reference to Examples; however, the present invention is not limited to the aspects of these Examples. The materials obtained in the Examples and Comparative Examples contain hafnium oxide as an inevitable impurity in an amount of 1.3 to 2.5 wt.% based on zirconium oxide.

Example 1

A zirconium oxychloride aqueous solution, a cerium chloride aqueous solution, and an yttrium chloride aqueous solution (all produced by Daiichi Kigenso Kagaku Kogyo Co., Ltd.) were weighed at a ratio of $(ZrO_2)_{0.89}(CeO_2)_{0.1}(Y_2O_3)_{0.01}$, and these aqueous solutions were mixed. The obtained mixture (raw material of compound A) was neutralized with a sodium hydroxide solution to obtain a cerium-yttrium-zirconium composite hydroxide slurry. In the slurry, hydroxide was present as a precipitate.

The obtained hydroxide slurry was subjected to solid-liquid separation, and hydroxide (precipitate) was collected. The precipitate was calcined in an electric furnace in atmospheric air at 1090°C for 5 hours. An oxide was obtained by this calcination. Subsequently, an alumina powder (a reagent produced by Wako Pure Chemical Industries) adjusted to an average particle diameter of 0.5 $\mu$m was added in an amount of 0.3 mol% based on the oxide. Thereafter, the resulting mixture was ground with a wet ball mill and dispersed, followed by drying at 120°C, thereby obtaining a powder.

When the XRD pattern of the obtained powder was measured by an X-ray diffractometer, the XRD pattern of the sample indicated a monoclinic crystal phase and a tetragonal crystal phase.

Next, the composition was molded by CIP at a pressure of 1.0 t/cm$^2$ for 2 minutes, and heated (sintered) in an electric furnace in atmospheric air at 1450°C for 2 hours, thereby obtaining a sintered body. When the XRD pattern of the obtained sintered body was measured by an X-ray diffractometer, the XRD pattern of the sample indicated a tetragonal crystal phase and a cubic crystal phase. The electrical conductivity of the sintered body measured by an alternating-current impedance method was as follows:

$5.9 \times 10^{-4}$ (S/cm) at 600°C,
$1.9 \times 10^{-3}$ (S/cm) at 700°C,
$4.4 \times 10^{-3}$ (S/cm) at 800°C,
$8.9 \times 10^{-3}$ (S/cm) at 900°C, and
$1.5 \times 10^{-2}$ (S/cm) at 1000°C.

Moreover, the fracture toughness value was 5.4 MPa·m$^{0.5}$, and the three-point bending strength was 772 MPa.

Example 2 (not according to the invention)

A powder and a sintered body were obtained in the same manner as in Example 1, except that the yttrium chloride aqueous solution was changed to a scandium chloride aqueous solution (produced by Daiichi Kigenso Kagaku Kogyo Co., Ltd.), and the zirconium oxychloride aqueous solution, the cerium chloride aqueous solution, and the scandium chloride aqueous solution were weighed so that the oxide had a composition ratio of $(ZrO_2)_{0.925}(CeO_2)_{0.06}(Sc_2O_3)_{0.015}$. The electrical conductivity of the sintered body measured by an alternating-current impedance method was as follows:

$1.2 \times 10^{-3}$ (S/cm) at 600°C,
$3.7 \times 10^{-3}$ (S/cm) at 700°C,
$8.4 \times 10^{-3}$ (S/cm) at 800°C,
$1.6 \times 10^{-2}$ (S/cm) at 900°C, and
$2.6 \times 10^{-2}$ (S/cm) at 1000°C.

Moreover, the fracture toughness value was 9.3 MPa·m$^{0.5}$, and the three-point bending strength was 1015 MPa.

Example 3

A powder and a sintered body were obtained in the same manner as in Example 2, except that the composition of the oxide was changed to $(ZrO_2)_{0.92}(CeO_2)_{0.07}(Sc_2O_3)_{0.01}$. The electrical conductivity of the sintered body measured by an alternating-current impedance method was as follows:

$8.0 \times 10^{-4}$ (S/cm) at 600°C,
$2.5 \times 10^{-3}$ (S/cm) at 700°C,
$5.6 \times 10^{-3}$ (S/cm) at 800°C,
$1.1 \times 10^{-2}$ (S/cm) at 900°C, and
$1.7 \times 10^{-2}$ (S/cm) at 1000°C.

Moreover, the fracture toughness value was 15.4 MPa·m$^{0.5}$, and the three-point bending strength was 854 MPa.

Example 4

A powder and a sintered body were obtained in the same manner as in Example 2, except that the composition of the oxide was changed to $(ZrO_2)_{0.91}(CeO_2)_{0.08}(Sc_2O_3)_{0.01}$. The electrical conductivity of the sintered body measured by an alternating-current impedance method was as follows:

$7.0 \times 10^{-4}$ (S/cm) at 600°C,
$2.2 \times 10^{-3}$ (S/cm) at 700°C,
$5.2 \times 10^{-3}$ (S/cm) at 800°C,
$1.0 \times 10^{-2}$ (S/cm) at 900°C, and
$1.7 \times 10^{-2}$ (S/cm) at 1000°C.

Moreover, the fracture toughness value was 10.4 MPa·m$^{0.5}$, and the three-point bending strength was 875 MPa.

Example 5

A powder and a sintered body were obtained in the same manner as in Example 2, except that the composition of the oxide was changed to $(ZrO_2)_{0.89}(CeO_2)_{0.1}(Sc_2O_3)_{0.01}$. The electrical conductivity of the sintered body measured by an alternating-current impedance method was as follows:

$6.5 \times 10^{-4}$ (S/cm) at 600°C,
$2.1 \times 10^{-3}$ (S/cm) at 700°C,
$5.0 \times 10^{-3}$ (S/cm) at 800°C,
$9.8 \times 10^{-3}$ (S/cm) at 900°C, and
$1.7 \times 10^{-2}$ (S/cm) at 1000°C.

Moreover, the fracture toughness value was 7.9 MPa·m$^{0.5}$, and the three-point bending strength was 918 MPa.

Example 6

A powder and a sintered body were obtained in the same manner as in Example 2, except that the composition of the oxide was changed to $(ZrO_2)_{0.87}(CeO_2)_{0.12}(Sc_2O_3)_{0.01}$. The electrical conductivity of the sintered body measured by an alternating-current impedance method was as follows:

$5.2 \times 10^{-4}$ (S/cm) at 600°C,
$1.8 \times 10^{-3}$ (S/cm) at 700°C,
$4.4 \times 10^{-3}$ (S/cm) at 800°C,
$8.8 \times 10^{-3}$ (S/cm) at 900°C, and
$1.5 \times 10^{-2}$ (S/cm) at 1000°C.

Moreover, the fracture toughness value was 5.4 MPa·m$^{0.5}$, and the three-point bending strength was 896 MPa.

Example 7

A powder and a sintered body were obtained in the same manner as in Example 1, except that the yttrium chloride aqueous solution was changed to an ytterbium chloride aqueous solution (produced by Daiichi Kigenso Kagaku Kogyo Co., Ltd.), and the zirconium oxychloride aqueous solution, the cerium chloride aqueous solution, and the scandium chloride aqueous solution were weighed so that the oxide had a composition ratio of $(ZrO_2)_{0.89}(CeO_2)_{0.1}(Yb_2O_3)_{0.01}$. The electrical conductivity of the sintered body measured by an alternating-current impedance method was as follows:

$6.0 \times 10^{-4}$ (S/cm) at 600°C,
$1.9 \times 10^{-3}$ (S/cm) at 700°C,
$4.5 \times 10^{-3}$ (S/cm) at 800°C,
$9.0 \times 10^{-2}$ (S/cm) at 900°C, and
$1.6 \times 10^{-2}$ (S/cm) at 1000°C.

Moreover, the fracture toughness value was 5.3 MPa·m$^{0.5}$, and the three-point bending strength was 861 MPa.

Example 8 (not according to the invention)

A powder and a sintered body were obtained in the same manner as in Example 1, except that the yttrium chloride aqueous solution was changed to a scandium chloride aqueous solution (produced by Daiichi Kigenso Kagaku Kogyo Co., Ltd.), and the zirconium oxychloride aqueous solution, the cerium chloride aqueous solution, and the scandium chloride aqueous solution were weighed so that the oxide had a composition ratio of $(ZrO_2)_{0.93}(CeO_2)_{0.05}(Sc_2O_3)_{0.02}$. The electrical conductivity of the sintered body measured by an alternating-current impedance method was as follows:

$2.0 \times 10^{-3}$ (S/cm) at 600°C,
$5.0 \times 10^{-3}$ (S/cm) at 700°C,
$11.0 \times 10^{-3}$ (S/cm) at 800°C,
$2.0 \times 10^{-2}$ (S/cm) at 900°C, and
$3.2 \times 10^{-2}$ (S/cm) at 1000°C.

Moreover, the fracture toughness value was 6.1 MPa·m$^{0.5}$, and the three-point bending strength was 791 MPa.

Comparative Example 1

A powder and a sintered body were obtained in the same manner as in Example 1, except that alumina was not added. When the XRD pattern of the obtained sintered body was measured by an X-ray diffractometer, the XRD pattern of the sample indicated a tetragonal crystal phase and a cubic crystal phase. The electrical conductivity of the sintered body measured by an alternating-current impedance method was as follows:

$4.6 \times 10^{-4}$ (S/cm) at 600°C,
$1.5 \times 10^{-3}$ (S/cm) at 700°C,
$3.6 \times 10^{-3}$ (S/cm) at 800°C,
$7.1 \times 10^{-3}$ (S/cm) at 900°C, and
$1.4 \times 10^{-2}$ (S/cm) at 1000°C.

Moreover, the fracture toughness value was 5.5 MPa·m$^{0.5}$, and the three-point bending strength was 690 MPa.

Comparative Example 2

A powder and a sintered body were obtained in the same manner as in Example 1, except that the composition of the oxide was changed to $(ZrO_2)_{0.88}(CeO_2)_{0.12}$ (that is, a rare earth element oxide other than cerium was not contained). The electrical conductivity of the sintered body measured by an alternating-current impedance method was as follows:

$5.5 \times 10^{-5}$ (S/cm) at 600°C,
$2.0 \times 10^{-4}$ (S/cm) at 700°C,
$5.3 \times 10^{-4}$ (S/cm) at 800°C,
$1.1 \times 10^{-3}$ (S/cm) at 900°C, and
$2.0 \times 10^{-3}$ (S/cm) at 1000°C.

The fracture toughness value was not measurable because cracks were not formed in the sintered body. The three-point bending strength was 531 MPa.

Comparative Example 3

A powder and a sintered body were obtained in the same manner as in Example 1, except that the composition of the oxide was changed to $(ZrO_2)_{0.86}(CeO_2)_{0.14}$ (that is, a rare earth element oxide other than cerium was not contained). The electrical conductivity of the sintered body measured by an alternating-current impedance method was as follows:

$4.0 \times 10^{-4}$ (S/cm) at 600°C,
$1.4 \times 10^{-3}$ (S/cm) at 700°C,
$3.8 \times 10^{-3}$ (S/cm) at 800°C,
$8.1 \times 10^{-4}$ (S/cm) at 900°C, and
$1.5 \times 10^{-2}$ (S/cm) at 1000°C.

Moreover, the fracture toughness value was 6.2 MPa·m$^{0.5}$, and the bending strength was 435 MPa.

Comparative Example 4

A powder and a sintered body were obtained in the same manner as in Example 1, except that the composition of the oxide was changed to $(ZrO_2)_{0.97}(Y_2O_3)_{0.03}$ (that is, cerium oxide was not contained). The electrical conductivity of the sintered body measured by an alternating-current impedance method was as follows:

$1.7 \times 10^{-3}$ (S/cm) at 600°C,
$5.9 \times 10^{-3}$ (S/cm) at 700°C,
$1.4 \times 10^{-2}$ (S/cm) at 800°C,
$2.9 \times 10^{-3}$ (S/cm) at 900°C, and
$5.0 \times 10^{-2}$ (S/cm) at 1000°C.

Moreover, the fracture toughness value was 4.4 MPa·m$^{0.5}$, and the bending strength was 985 MPa.

The sintered bodies of the powders obtained in Examples 1 to 8 were materials having both excellent electrical conduction properties and mechanical characteristics. In contrast, in Comparative Example 1, the electrical conductivity was low because alumina was not contained; in Comparative Examples 2 and 3, both electrical conductivity and mechanical characteristics worsened because an oxide of a rare earth element (other than cerium) was not contained; and in Comparative Example 4, the fracture toughness value was low because cerium oxide was not contained.

**[0104]** The evaluation methods in the Examples and Comparative Examples were carried out in the following manner.

X-Ray Diffraction Method

**[0105]** The crystal structure was determined from spectra obtained by X-ray diffraction (XRD) analysis. The X-ray diffraction analysis was performed using "MiniFlexII" (produced by Rigaku Corporation) with CuK$\alpha$1 radiation at 2$\theta$ of 28° to 32° at room temperature (peaks appear at around 28° and 32° in the case of a monoclinic crystal, and a peak appears at around 30° in the case of a stabilized phase (a tetragonal or cubic crystal)). Regarding the tetragonal or cubic crystal, when two separated peaks were observed at 72° to 76°, the crystal structure was regarded as tetragonal, and when one peak was observed, the crystal structure was regarded as cubic.

Measurement of Electrical Conductivity by Alternating-Current Impedance Method

**[0106]** An impedance meter (HP4194A) was used for the measurement of electrical conductivity. The measurement was performed while the frequency range of the impedance meter was set to 100 Hz to 10 MHz. The electrical conductivity was measured by plotting (Arrhenius plotting) the relationship between electrical conductivity and temperature by complex impedance analysis in a temperature range of 600°C to 1000°C.

Measurement of Fracture Toughness Value

**[0107]** The fracture toughness value of the sintered bodies was measured according to the formula of JIS 1607. Specifically, Vickers hardness measured using a Vickers indenter was regarded as Hv, Young's modulus was regarded as E, pressing load was regarded as P, half of the average crack length was regarded as c, and the fracture toughness value $K_{IC}$ was determined by the following formula:

$$K_{IC} = 0.018 \times [E/Hv]^{\wedge}(0.5) \times P/[c^{\wedge}(1.5)].$$

Measurement of Bending Strength

**[0108]** The bending strength of the sintered bodies was evaluated by a three-point bending measurement method according to JIS R1601.

## Claims

1. A cerium oxide-stabilized zirconium oxide-based composition comprising a compound represented by the following formula (1):

$$(ZrO_2)_{1-x-a}(CeO_2)_x(M_2O_3)_a \qquad (1)$$

and alumina;

wherein in formula (1), the value of x is $0.065 \leq x \leq 0.12$, the value of a is $0.01 \leq a \leq 0.03$, and M is at least one rare earth element other than cerium; and
the alumina is contained in an amount of 1 mol% or less based on the compound.

2. The composition according to claim 1, wherein in formula (1), the value of a is $0.01 \leq a \leq 0.02$.

3. The composition according to claim 1 or 2, wherein in formula (1), M is at least one member selected from the group consisting of Sc, Y, and Yb.

4. A sintered body obtainable by sintering the composition according to any one of claims 1 to 3, wherein the sintered body has a fracture toughness value of 5 MPa·$m^{0.5}$ or more, and/or
the sintered body has a bending strength of 700 MPa or more.

5. The sintered body according to claim 4, wherein the sintered body has an electrical conductivity at 600°C of $5 \times 10^{-4}$ S/cm or more.

**6.** The sintered body according to claim 4 or 5, wherein the sintered body has an electrical conductivity at 1000°C of $1.5 \times 10^{-2}$ S/cm or more.

**7.** The sintered body according to any one of claims 4 to 6, wherein the sintered body contains a tetragonal crystal phase.

**8.** A method for producing the cerium oxide-stabilized zirconium oxide-based composition according to any one of claims 1 to 3, the method comprising the following steps 1 to 4:

step 1: preparing a raw material containing a zirconium salt, a cerium salt, a rare earth salt other than cerium, and a solvent;
step 2: neutralizing the raw material obtained in step 1 to obtain a precipitate;
step 3: calcining the precipitate obtained in step 2 to obtain an oxide; and
step 4: mixing the oxide obtained in step 3 with alumina.

**9.** A method for producing a sintered body according to any one of claims 4 to 7, the method comprising sintering a composition according to any one of claims 1 to 3 or a composition produced according to the method of claim 8.

**Patentansprüche**

**1.** Ceroxid-stabilisierte Zirconiumoxid-basierte Zusammensetzung, umfassend eine Verbindung, dargestellt durch die folgende Formel (1):

$$(ZrO_2)_{1-x-a},(CeO_2)_x(M_2O_3)_a \qquad (1)$$

und Aluminiumoxid;

wobei in Formel (1) der Wert von x $0,065 \leq x \leq 0,12$ ist, der Wert von a $0,01 \leq a \leq 0,03$ ist und M mindestens ein anderes Seltenerdelement als Cer ist; und
das Aluminiumoxid in einer Menge von 1 mol-% oder weniger basierend auf der Verbindung enthalten ist.

**2.** Zusammensetzung nach Anspruch 1, wobei in Formel (1) der Wert von a $0,01 \leq a \leq 0,02$ ist.

**3.** Zusammensetzung nach Anspruch 1 oder 2, wobei in Formel (1) M mindestens ein Vertreter, ausgewählt aus der Gruppe, bestehend aus Sc, Y und Yb, ist.

**4.** Sinterkörper, erhältlich durch Sintern der Zusammensetzung nach einem der Ansprüche 1 bis 3, wobei

der Sinterkörper einen Bruchzähigkeitswert von 5 MPa·m$^{0,5}$ oder mehr hat und/oder
der Sinterkörper eine Biegefestigkeit von 700 MPa oder mehr hat.

**5.** Sinterkörper nach Anspruch 4, wobei der Sinterkörper eine elektrische Leitfähigkeit bei 600 °C von $5 \times 10^{-4}$ S/cm oder mehr hat.

**6.** Sinterkörper nach Anspruch 4 oder 5, wobei der Sinterkörper eine elektrische Leitfähigkeit bei 1.000 °C von $1,5 \times 10^{-2}$ S/cm oder mehr hat.

**7.** Sinterkörper nach einem der Ansprüche 4 bis 6, wobei der Sinterkörper eine tetragonale Kristallphase enthält.

**8.** Verfahren zur Herstellung der Ceroxid-stabilisierten Zirconiumoxid-basierten Zusammensetzung nach einem der Ansprüche 1 bis 3, wobei das Verfahren die folgenden Schritte 1 bis 4 umfasst:

Schritt 1: Herstellen eines Rohmaterials, das ein Zirconiumsalz, ein Cersalz, ein anderes Seltenerdsalz als Cer und ein Lösungsmittel enthält;
Schritt 2: Neutralisieren des in Schritt 1 erhaltenen Rohmaterials unter Erhalt eines Niederschlags;
Schritt 3: Kalzinieren des in Schritt 2 erhaltenen Niederschlags unter Erhalt eines Oxids; und
Schritt 4: Mischen des in Schritt 3 erhaltenen Oxids mit Aluminiumoxid.

9. Verfahren zur Herstellung eines Sinterkörpers nach einem der Ansprüche 4 bis 7, wobei das Verfahren das Sintern einer Zusammensetzung nach einem der Ansprüche 1 bis 3 oder einer Zusammensetzung, hergestellt gemäß den Verfahren von Anspruch 8, umfasst.

## Revendications

1. Composition à base d'oxyde de zirconium stabilisée à l'oxyde de cérium comprenant un composé représenté par la formule (1) suivante :

$$(ZrO_2)_{1-x-a}(CeO_2)x(M_2O_3)_a \qquad (1)$$

et de l'alumine ;

dans laquelle dans la formule (1), la valeur de x est $0,065 \leq x \leq 0,12$, la valeur de a est $0,01 \leq a \leq 0,03$, et M représente au moins un élément de terre rare autre que le cérium ; et
l'alumine est contenue en une quantité de 1 % en mole ou moins par rapport au composé.

2. Composition selon la revendication 1, dans laquelle dans la formule (1), la valeur de a est $0,01 \leq a \leq 0,02$.

3. Composition selon la revendication 1 ou 2, dans laquelle dans la formule (1), M représente au moins un élément choisi dans le groupe constitué de Sc, Y et Yb.

4. Corps fritté pouvant être obtenu par frittage de la composition selon l'une quelconque des revendications 1 à 3, dans lequel le corps fritté a une valeur de ténacité à la rupture de 5 MPa.m$^{0.5}$ ou plus, et/ou
le corps fritté a une résistance à la flexion de 700 MPa ou plus.

5. Corps fritté selon la revendication 4, dans lequel le corps fritté a une conductivité électrique à 600°C de $5 \times 10^{-4}$ S/cm ou plus.

6. Corps fritté selon la revendication 4 ou 5, dans lequel le corps fritté a une conductivité électrique à 1000°C de $1,5 \times 10^{-2}$ S/cm ou plus.

7. Corps fritté selon l'une quelconque des revendications 4 à 6, dans lequel le corps fritté contient une phase cristalline tétragonale.

8. Procédé de production de la composition à base d'oxyde de zirconium stabilisée à l'oxyde de cérium selon l'une quelconque des revendications 1 à 3, le procédé comprenant les étapes 1 à 4 suivantes :

étape 1 : préparer une matière première contenant un sel de zirconium, un sel de cérium, un sel de terre rare autre que le cérium, et un solvant ;
étape 2 : neutraliser la matière première obtenue à l'étape 1 pour obtenir un précipité ;
étape 3 : calciner le précipité obtenu à l'étape 2 pour obtenir un oxyde ; et
étape 4 : mélanger l'oxyde obtenu à l'étape 3 avec de l'alumine.

9. Procédé de production d'un corps fritté selon l'une quelconque des revendications 4 à 7, le procédé comprenant le frittage d'une composition selon l'une quelconque des revendications 1 à 3 ou d'une composition produite selon le procédé de la revendication 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2006024098 A1
- JP S6177665 A
- EP 0214291 A1
- JP 2013008684 A
- JP S63139049 A
- JP 2000327416 A
- JP 2006104023 A
- JP 2011079723 A

### Non-patent literature cited in the description

- **LIU, MAN et al.** Investigation of $(CeO_2)x(Sc_2O_3)(0.11-x)(ZrO_2)0.89$ (x=0.01-0.10) electrolyte materials for intermediate-temperature solid oxide fuel cell. *Journal of Alloys and Compounds,* 28 December 2009, vol. 502, 319-323